# EUROPEAN PATENT APPLICATION

(11) **EP 4 475 214 A1**
(43) Date of publication of application: **11.12.2024**
(21) Application number: 23746658.6
(22) Date of filing: 12.01.2023
(51) Int. Cl.: H01M 4/134, H01M 4/133, H01M 4/38

(54) **LITHIUM ION BATTERY**

(30) Priority: 31.01.2022 JP 2022012762
(71) Applicant: Panasonic Intellectual Property Management Co., Ltd., Osaka-shi, Osaka 540-6207 (JP)
(72) Inventor: ASANO, Kazuko, Kadoma-shi, Osaka 571-0057 (JP); OKI, Yukihiro, Kadoma-shi, Osaka 571-0057 (JP); HIBINO, Mitsuhiro, Kadoma-shi, Osaka 571-0057 (JP)
(74) Representative: Novagraaf International SA
(86) International application number: PCT/JP2023/000521
(87) International publication number: WO 2023/145443

(57) **Abstract**

A lithium ion battery having a high capacity and improved rapid charging performance is provided. A lithium ion battery according to an aspect of the present disclosure is provided with a positive electrode, a negative electrode, and a non-aqueous electrolyte. The negative electrode has a negative electrode core body, a first negative electrode mixture layer formed on the surface of the negative electrode core body, and a second negative electrode mixture layer formed on the surface of the first negative electrode mixture layer. The first negative electrode mixture layer includes a first negative electrode active material that includes graphite. The second negative electrode mixture layer includes a second negative electrode active material that includes at least one selected from the group consisting of metals that bind to lithium, alloys that bind to lithium, and compounds that bind to lithium.

## Description

### TECHNICAL FIELD

The present disclosure relates to a lithium-ion battery.

### BACKGROUND ART

Lithium-ion batteries in which charge and discharge are performed by transfer of lithium ions (Li ions) between a positive electrode and a negative electrode have been widespread. As a negative electrode active material included in the negative electrode of the lithium-ion battery, graphite is commonly used. In recent years, as a negative electrode active material having a higher capacity than graphite, a metal, an alloy, a compound, and the like that bind to lithium have been investigated. For example, Patent Literature 1 describes that an alloy having a La₃Co₂Sn₇-type crystal structure is used as the negative electrode active material.

### CITATION LIST

### PATENT LITERATURE

PATENT LITERATURE 1: Japanese Patent No. 4127692

### SUMMARY

In recent years, the lithium-ion batteries have been widely used for a power source for an electric vehicle and the like, and for these use, improvement of high-speed charging performance has been required. The art in Patent Literature 1 does not consider achievement of both of the battery capacity and the high-speed battery performance, and still has room for improvement.

It is an advantage of the present disclosure to provide a lithium-ion battery having a high capacity and improved high-speed charging performance.

A lithium-ion battery of an aspect of the present disclosure comprises a positive electrode, a negative electrode, and a non-aqueous electrolyte, wherein the negative electrode has a negative electrode core, a first negative electrode mixture layer formed on a surface of the negative electrode core, and a second negative electrode mixture layer formed on a surface of the first negative electrode mixture layer, the first negative electrode mixture layer includes a first negative electrode active material including graphite, and the second negative electrode mixture layer includes a second negative electrode active material including at least one selected from the group consisting of a metal that binds to lithium, an alloy that binds to lithium, and a compound that binds to lithium.

According to the lithium-ion battery of the present disclosure, the battery capacity and the high-speed charging performance can be improved.

### BRIEF DESCRIPTION OF DRAWING

FIG. 1 is a vertical cross-sectional view of a cylindrical lithium-ion battery of an example of an embodiment.
FIG. 2 is a cross-sectional view of a negative electrode of an example of an embodiment.

### DESCRIPTION OF EMBODIMENTS

To increase a capacity of the lithium-ion battery, a negative electrode active material other than graphite has been investigated. For example, as the negative electrode active material having a high capacity, Patent Literature 1 discloses an alloy having a La₃Co₂Sn₇-type crystal structure. However, the alloy disclosed in Patent Literature 1 has a higher volume energy density but a lower weight energy density than graphite. The lithium-ion battery may be required to improve high-speed charging performance for some use. The present inventors have made intensive investigation, and consequently found that both the battery capacity and the high-speed charging performance may be achieved by forming a second negative electrode mixture layer including a negative electrode active material other than graphite on a surface of a first negative electrode mixture layer including graphite.

Hereinafter, an example of embodiments of the negative electrode active material according to the present disclosure, and the lithium-ion battery using the above negative electrode active material will be described in detail. In the lithium-ion battery, lithium ions are transferred between a positive electrode and a negative electrode to perform charge and discharge. Hereinafter, a cylindrical battery in which a wound electrode assembly is housed in a bottomed cylindrical exterior housing can will be exemplified, but the exterior is not limited to the cylindrical exterior housing can, and may be, for example, a rectangular exterior housing can, or may also be an exterior composed of laminated sheets including a metal layer and a resin layer. The electrode assembly may be a stacked electrode assembly in which a plurality of positive electrodes and a plurality of negative electrodes are alternately stacked via separators. In addition, a liquid non-aqueous electrolyte will be exemplified hereinafter, but the non-aqueous electrolyte is not limited to liquid, and may be solid.

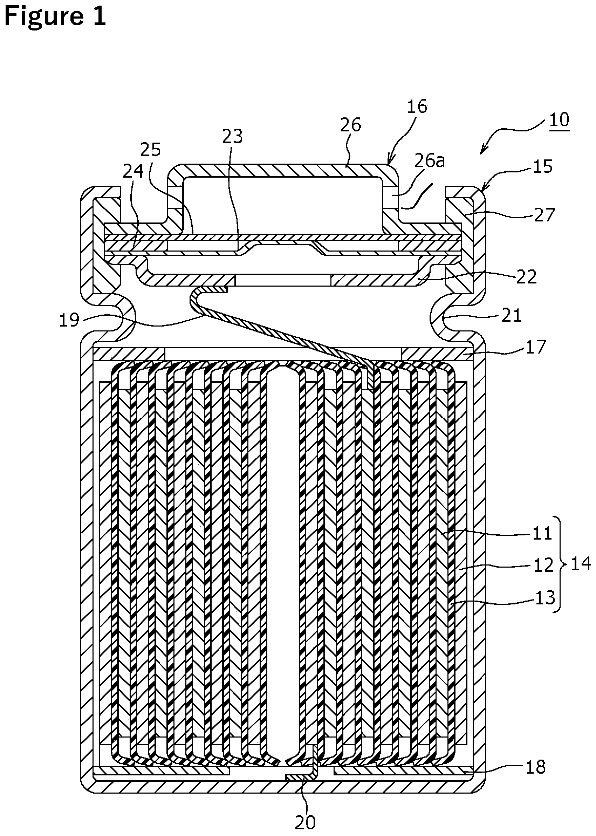

FIG. 1 is a vertical cross-sectional view of a cylindrical lithium-ion battery 10 of an example of an embodiment. In the lithium-ion battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound via a separator 13. As a solvent (organic solvent) of the non-aqueous electrolyte, carbonates, lactones, ethers, ketones, esters, and the like may be used, and two or more of these solvents may be mixed for use. When two or more of the solvents are mixed for use, a mixed solvent including a cyclic carbonate and a chain carbonate is preferably used. For example, ethylene carbonate (EC), propylene carbonate (PC), butylene carbonate (BC), or the like may be used as the cyclic carbonate, and dimethyl carbonate (DMC), ethyl methyl carbonate (EMC), diethyl carbonate (DEC), or the like may be used as the chain carbonate. As an electrolyte salt of the non-aqueous electrolyte, LiPF₆, LiBF₄, LiCF₃SO₃, or the like, and a mixture thereof may be used. An amount of the electrolyte salt to be dissolved in the solvent may be, for example, greater than or equal to 0.5 mol/L and less than or equal to 2.0 mol/L. Hereinafter, for convenience of description, the side of a sealing assembly 16 will be described as the "upper side", and the bottom side of the exterior 15 will be described as the "lower side".

The opening end of the exterior 15 is capped with the sealing assembly 16 to seal an inside of the lithium-ion battery 10. Insulating plates 17 and 18 are provided on the upper and lower sides of the electrode assembly 14, respectively. A positive electrode lead 19 extends upward through a through hole of the insulating plate 17, and is welded with the lower face of a filter 22, which is a bottom plate of the sealing assembly 16. In the lithium-ion battery 10, a cap 26, which is a top plate of the sealing assembly 16 electrically connected to the filter 22, becomes a positive electrode terminal. On the other hand, a negative electrode lead 20 extends through a through hole of the insulating plate 18 toward the bottom side of the exterior 15, and is welded with a bottom inner face of the exterior 15. In the lithium-ion battery 10, the exterior 15 becomes a negative electrode terminal. When the negative electrode lead 20 is provided on the end, the negative electrode lead 20 extends through an outside of the insulating plate 18 toward the bottom side of the exterior 15, and is welded with the bottom inner face of the exterior 15.

The exterior 15 is, for example, a bottomed cylindrical metallic exterior housing can. A gasket 27 is provided between the exterior 15 and the sealing assembly 16 to achieve sealability inside the lithium-ion battery 10. The exterior 15 has a grooved portion 21 formed by, for example, pressing the side wall thereof from the outside to support the sealing assembly 16. The grooved portion 21 is preferably formed in a circular shape along a circumferential direction of the exterior 15, and supports the sealing assembly 16 via the gasket 27 with the upper face thereof.

The sealing assembly 16 has the filter 22, a lower vent member 23, an insulating member 24, an upper vent member 25, and the cap 26, which are stacked in this order from the electrode assembly 14 side. Respective members constituting the sealing assembly 16 have, for example, a disk shape or a ring shape, and the members except for the insulating member 24 are electrically connected to each other. The lower vent member 23 and the upper vent member 25 are connected to each other at each of the centers, and the insulating member 24 is interposed between the circumferences. If the internal pressure of the battery increases due to abnormal heat generation, for example, the lower vent member 23 breaks and thereby the upper vent member 25 expands toward the cap 26 side to be separated from the lower vent member 23, resulting in breakage of electrical connection between both the members. If the internal pressure further increases, the upper vent member 25 breaks, and gas is discharged through an opening 26a of the cap 26.

Hereinafter, the positive electrode 11, the negative electrode 12, and the separator 13, which constitute the electrode assembly 14, particularly the negative electrode 12, will be described in detail.

### [Positive Electrode]

The positive electrode 11 has, for example, a positive electrode core and a positive electrode mixture layer provided on a surface of the positive electrode core. For the positive electrode core, a foil of a metal stable within a potential range of the positive electrode 11, such as aluminum, a film in which such a metal is disposed on a surface layer thereof, and the like may be used. A thickness of the positive electrode core is, for example, greater than or equal to 10 µm and less than or equal to 30 µm. The positive electrode mixture layer includes a positive electrode active material, a binder, and a conductive agent, and is preferably provided on both surfaces of the positive electrode core except for a portion to which the positive electrode lead 19 is to be connected. The positive electrode 11 may be produced by, for example, applying a positive electrode mixture slurry including the positive electrode active material, the binder, the conductive agent, and the like on the surface of the positive electrode core, and drying and subsequently compressing the applied film to form the positive electrode mixture layers on both the surfaces of the positive electrode core.

The positive electrode active material includes a lithium-transition metal oxide as a main component. The positive electrode active material may be composed of substantially only the lithium-transition metal oxide, and particles of an inorganic compound, such as aluminum oxide and a lanthanoid-containing compound, may adhere to particle surfaces of the lithium-transition metal oxide. The lithium-transition metal oxide may be used singly, or may be used in combination of two or more thereof.

Examples of a metal element contained in the lithium-transition metal oxide include nickel (Ni), cobalt (Co), manganese (Mn), aluminum (Al), boron (B), magnesium (Mg), titanium (Ti), vanadium (V), chromium (Cr), iron (Fe), copper (Cu), zinc (Zn), gallium (Ga), strontium (Sr), zirconium (Zr), niobium (Nb), indium (In), tin (Sn), tantalum (Ta), and tungsten (W). A preferable example of the lithium-transition metal oxide is a composite oxide represented by the general formula: LiₐNiₓM₍₁₋ₓ₎O₂ (0.1≤α≤1.2, 0.3≤x<1, and M includes at least one selected from the group consisting of Co, Mn, and Al).

Examples of the conductive agent included in the positive electrode mixture layer may include a carbon material such as carbon black (CB), acetylene black (AB), Ketjenblack, carbon nanotube (CNT), carbon nanofiber, graphene, and graphite. Examples of the binder included in the positive electrode mixture layer may include a fluororesin such as polytetrafluoroethylene (PTFE) and polyvinylidene fluoride (PVDF), polyacrylonitrile (PAN), a polyimide resin, an acrylic resin, and a polyolefin resin. With these resins, cellulose derivatives such as carboxymethylcellulose (CMC) or a salt thereof, polyethylene oxide (PEO), and the like may be used in combination.

### [Negative Electrode]

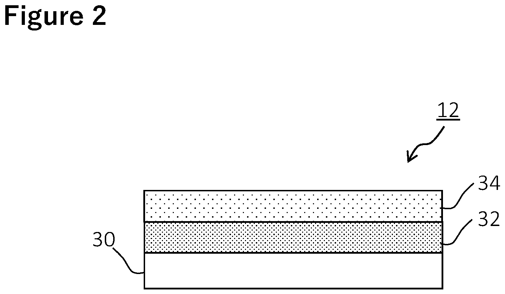

FIG. 2 is a cross-sectional view of the negative electrode 12 of an example of an embodiment. The negative electrode 12 has a negative electrode core 30, a first negative electrode mixture layer 32 formed on a surface of the negative electrode core 30, and a second negative electrode mixture layer 34 formed on a surface of the first negative electrode mixture layer 32. The first negative electrode mixture layer 32 and the second negative electrode mixture layer 34 are preferably provided on both surfaces of the negative electrode core 30. Thicknesses of the first negative electrode mixture layer 32 and the second negative electrode mixture layer 34 may be the same as or different from each other. A ratio of the thickness of the first negative electrode mixture layer 32 and the second negative electrode mixture layer 34 is, for example, greater than or equal to 9:1 and less than or equal to 1:9, preferably greater than or equal to 9:1 and less than or equal to 5:5, and more preferably greater than or equal to 9:1 and less than or equal to 7:3.

For the negative electrode core 30, a foil of a metal stable within a potential range of the negative electrode 12, such as copper, a film in which such a metal is disposed on a surface layer thereof, and the like may be used. A thickness of the negative electrode core 30 is, for example, greater than or equal to 5 µm and less than or equal to 30 µm.

The first negative electrode mixture layer 32 includes a first negative electrode active material. The first negative electrode active material is, for example, powder. The first negative electrode active material includes graphite. Examples of the graphite particles include natural graphite and artificial graphite.

The second negative electrode mixture layer 34 includes a second negative electrode active material. The second negative electrode active material is, for example, powder. The second negative electrode active material includes at least one selected from the group consisting of a metal that binds to lithium, an alloy that binds to lithium, and a compound that binds to lithium. As for activation energy in lithium insertion, the second negative electrode mixture layer 34 has lower energy than the first negative electrode mixture layer 32 including graphite. As for potential in lithium insertion, the second negative electrode active material has higher potential than the first negative electrode active material. Therefore, lithium is inserted into the second negative electrode active material with priority in an initial stage of charge. In the initial stage to the middle stage of charge, the second negative electrode mixture layer 34 is formed on the surface of the first negative electrode mixture layer 32 to occlude Li in the second negative electrode active material, and thereby the high-speed charging performance is improved.

Examples of the metal that binds to lithium include Si and Sn. Examples of the compound that binds to lithium include: a Si oxide represented by SiOₓ (x represents greater than or equal to 0.5 and less than or equal to 1.6); a Si-containing material in which Si fine particles are dispersed in a lithium silicate phase represented by Li_{2y}SiO_{(2+y)} (0<y<2); a Si-containing material in which Si fine particles are dispersed in a carbon phase; and a Sn oxide.

Examples of the alloy that binds to lithium include an alloy represented by the general formula M₃Me₂X₇, wherein M includes at least one of La and Ca, Me includes at least one element selected from the group consisting of Mn, Ni, Fe, and Co, and X includes at least one element selected from the group consisting of Ge, Si, Sn, Al, and Bi (hereinafter, which may be referred to as "M₃Me₂X₇-type alloy"). The M₃Me₂X₇-type alloy is, for example, La₃Ni₂Sn₇.

A median diameter (D50) on a volumetric basis of the M₃Me₂X₇-type alloy may be, for example, greater than or equal to 0.1 µm and less than or equal to 50 µm, or may be greater than or equal to 1 µm and less than or equal to 10 µm. The D50 of the M₃Me₂X₇-type alloy may be reduced by crushing with a ball mill, for example, and may be regulated with the ball-mill treatment conditions. The D50 means a particle diameter at which a cumulative frequency is 50% from a smaller particle diameter side in a particle size distribution on a volumetric basis. The particle size distribution of the M₃Me₂X₇-type alloy may be measured by using a laser diffraction-type particle size distribution measuring device (for example, MT3000II, manufactured by MicrotracBEL Corp.) with water as a dispersion medium.

The second negative electrode mixture layer 34 may further include a conductive agent. The conductive agent can achieve a conductive path in the second negative electrode mixture layer 34. Examples of the conductive agent included in the second negative electrode mixture layer 34 may include a carbon material such as carbon black (CB), acetylene black (AB), Ketjenblack, carbon nanotube (CNT), carbon nanofiber, graphene, and graphite. These may be used singly, or may be used in combination of two or more thereof. The conductive agent preferably includes CNT from the viewpoint of achievement of the conductive path. Examples of CNT include single-walled carbon nanotube (SWCNT) and multi-walled carbon nanotube (MWCNT). The conductive agent included in the second negative electrode mixture layer 34 may include SWCNT. CNT contained in the second negative electrode mixture layer 34 may be a combination of SWCNT and MWCNT. The first negative electrode mixture layer 32 may include a conductive agent. The conductive agent included in the first negative electrode mixture layer 32 may be the same as or different from the conductive agent included in the second negative electrode mixture layer 34.

The first negative electrode mixture layer 32 and the second negative electrode mixture layer 34 may further include a binder. Examples of the binder included in the first negative electrode mixture layer 32 and the second negative electrode mixture layer 34 include a fluororesin such as polytetrafluoroethylene (PTFE) and polyvinylidene fluoride (PVDF), polyacrylonitrile (PAN), a polyimide resin, an acrylic resin, and a polyolefin resin, as in the case of the positive electrode 11. With these resins, cellulose derivatives such as carboxymethylcellulose (CMC) or a salt thereof, polyethylene oxide (PEO) and the like may be used in combination. When the mixture slurry is prepared by using an aqueous solvent, CMC or a salt thereof, styrene-butadiene rubber (SBR), polyacrylic acid (PAA) or a salt thereof, polyvinyl alcohol, and the like are preferably used. The binder included in the first negative electrode mixture layer 32 and the second negative electrode mixture layer 34 may be the same as or different from each other.

Next, a method for forming the first negative electrode mixture layer 32 and the second negative electrode mixture layer 34 will be described. To form the negative electrode mixture layer having such a configuration, a multilayer die coater is preferably used. Use of the multilayer die coater may apply a plurality of negative electrode mixture slurries on the negative electrode core 40 in a stacking state at a predetermined ratio.

For example, first, the first negative electrode active material, the binder, the conductive agent, and a solvent are mixed to prepare a first negative electrode mixture slurry. Separately from this, the second negative electrode active material, the binder, the conductive agent, and a solvent are mixed to prepare a second negative electrode mixture slurry. Then, the first electrode mixture slurry and the second electrode mixture slurry are applied on both surfaces of the negative electrode core 30 by using the multilayer die coater while stacking the slurries at a predetermined ratio. After the applied film is dried, the first negative electrode mixture layer 32 and the second negative electrode mixture layer 34 may be rolled with a roller to form the negative electrode 12. The solvent used for preparing the slurry may be an organic solvent such as N-methyl-2-pyrrolidone (NMP), or may be water.

### [Separator]

For the separator 13, a porous sheet having an ion permeation property and an insulation property is used. Specific examples of the porous sheet include a fine porous thin film, a woven fabric, and a nonwoven fabric. As a material of the separator 13, an olefin resin such as polyethylene and polypropylene, cellulose, and the like are preferable. The separator 13 may have any of a single-layered structure and a multilayered structure. On a surface of the separator 13, a heat-resistant layer including a heat-resistance material may be formed. Examples of the heat-resistant material may include: polyamide resins, such as an aliphatic polyamide and an aromatic polyamide (aramid); and polyimide resins, such as a polyamideimide and a polyimide.

### EXAMPLES

Hereinafter, the present disclosure will be further described with Examples, but the present disclosure is not limited to these Examples.

### <Example>

### [Production of Negative Electrode]

Artificial graphite powder and polyvinylidene fluoride (PVDF) were mixed at a mass ratio of 93:7, and an appropriate amount of N-methyl-2-pyrrolidone (NMP) was further added to prepare a negative electrode mixture slurry A. La₃Ni₂Sn₇ powder, single-walled carbon nanotube (SWCNT), and PVDF were mixed at a mass ratio of 97.6:0.4:2, and an appropriate amount of NMP was further added to prepare a negative electrode mixture slurry B.

On a surface of a negative electrode core made of copper, the negative electrode mixture slurry A and the negative electrode mixture slurry B were simultaneously applied by using a multilayer die coater, and dried. At this time, the negative electrode mixture slurry A formed a first negative electrode mixture layer, and the negative electrode mixture slurry B formed a second negative electrode mixture layer. Then, this applied film was rolled with a roller, and cut to 1.5 cm × 1.5 cm to produce a negative electrode. Before the rolling, a thickness of the first negative electrode mixture layer was 84 µm, and a thickness of the second negative electrode mixture layer was 22 µm.

### [Production of Non-Aqueous Electrolyte]

Into a non-aqueous solvent in which ethylene carbonate (EC) and ethyl methyl carbonate (EMC) were mixed at a volume ratio of 1:3, LiPF₆ as an electrolyte salt was dissolved at 1.0 mol/L to prepare a non-aqueous electrolyte.

### [Production of Test Cell]

A lead wire was attached to each of the above positive electrode and a counter electrode composed of lithium metal foil, and the positive electrode and the counter electrode were disposed opposite to each other via a separator made of a polyolefin to produce an electrode assembly. This electrode assembly and the above non-aqueous electrolyte were sealed in an exterior composed of an aluminum laminate film to produce a test cell. In a common lithium-ion battery, a lithium-transition metal oxide (commonly including a transition metal such as Co, Mn, and Ni) such as LiNiO₂ is used for the positive electrode active material. However, in order to determine properties of the negative electrode itself not depending on the positive electrode, not the positive electrode commonly used for the electrode but the lithium metal foil with 2.2 cm × 2.0 cm was used here as the counter electrode. Such a method is often used for evaluating the electrode.

### <Comparative Example 1>

A test cell was produced in the same manner as in Example except that the multilayer die coater was not used, and the negative electrode mixture slurry A was applied on the surface of the negative electrode core composed of copper foil by a doctor-blade method. Before the rolling, a thickness of the negative electrode mixture layer was 106.5 µm.

### <Comparative Example 2>

A test cell was produced in the same manner as in Example except that the negative electrode was produced as follows.
(1) Artificial graphite powder and La₃Ni₂Sn₇ powder were mixed at a mass ratio of 46.7:47.0 to be prepared as a negative electrode active material. This negative electrode active material, SWCNT, and PVDF were mixed at a mass ratio of 97.6:0.4:2, and an appropriate amount of NMP was further added to prepare a negative electrode mixture slurry C.
(2) The negative electrode mixture slurry C was applied on the surface of the negative electrode core composed of copper foil by a doctor-blade method without the multilayer die coater, and the applied film was dried to form a negative electrode mixture layer. Thereafter, the negative electrode mixture layer was rolled by a roller, and cut so that an area of the negative electrode mixture layer was 1.5 cm × 1.5 cm to produce a negative electrode. Before the rolling, a thickness of the negative electrode mixture layer was 102.6 µm.

Charge performance of each of the test cells of Example and Comparative Examples was evaluated by the following method. Table 1 shows the evaluation results.

### [Evaluation of Charge Performance]

The charge in this present evaluation refers to charge of a battery combining: the negative electrode active material of Example and Comparative Examples; and the commonly used positive electrode exemplified by LiNiO₂ and the like. The above charge, which generally should be referred to as discharge because the coin-shaped battery has the negative electrode as a working electrode and the lithium metal (Li) as the counter electrode, is represented with a reverse charge-discharge direction for consisting with charge-discharge behavior of a negative electrode of a battery having a combination of commonly used positive electrode and negative electrode. That is, the charge refers to applying a current for decreasing a potential of a negative electrode being a working electrode, and the discharge refers to applying a current for increasing the potential of the negative electrode being the working electrode.

The test cell was charged at a constant current of 0.05 C until a battery voltage reached 0.01 V, and then discharged at a constant current of 0.05 C until the battery voltage reached 1.5 V. This charge-discharge cycle was performed twice to prepare an initial state.

The test cell in the initial state was charged at a constant current of 0.05 C until the battery voltage reached 0.01 V (CC charge), and then charged at a constant voltage of 0.01 V until a current value reached 0.02 C (CV charge). Thereafter, the test cell was discharged at a constant current of 0.05 C until the battery voltage reached 1.5 V. From the charge capacity in the CC charge (CC charge capacity) and a sum of the charge capacities in the CC charge and the CV charge (CC-CV charge capacity), the charge performance was calculated by using the following formula. Charge performance at 0.05 C = CC charge capacity / CC-CV charge capacity × 100

Charge performance at 0.2 C was calculated in the same manner as in the above calculation method of the charge performance at 0.05 C except that the current value in the CC charge was 0.2 C with the test cell after the above test.

Charge performance at 0.5 C was calculated in the same manner as in the above calculation method of the charge performance at 0.05 C except that the current value in the CC charge was 0.5 C with the test cell after the above test.

Charge performance at 1.0 C was calculated in the same manner as in the above calculation method of the charge performance at 0.05 C except that the current value in the CC charge was 1.0 C with the test cell after the above test.

**[Table 1]**

| | Charge performance [%] | | | |
|---|---|---|---|---|
| | 0.05C | 0.2C | 0.5C | 1.0C |
| Example 1 | 93.9 | 83.8 | 56.0 | 36.1 |
| Comparative Example 1 | 94.7 | 79.3 | 41.2 | 13.4 |
| Comparative Example 2 | 92.7 | 78.0 | 45.9 | 20.1 |

As shown in Table 1, the test cell of Example had improved charge performance compared with the test cells of Comparative Examples 1 and 2. Particularly, this tendency was remarkable as the CC-charging rate became higher. In the test cell of Comparative Example 2 in which the first negative electrode active material and the second negative electrode active material were mixed, the charge performance was improved compared with the test cell of Comparative Example 1, but fell short of the result of the test cell of Example. Therefore, it is found that the charge performance is specifically improved by forming the multilayer of the negative electrode mixture layer and including the specific negative electrode active material in each layer.

### REFERENCE SIGNS LIST

10 lithium-ion battery, 11 positive electrode, initial end part, 12 negative electrode, 13 separator, 14 electrode assembly, 15 exterior, 16 sealing assembly, 17, 18 insulating plate, 19 positive electrode lead, 20 negative electrode lead, 21 grooved portion, 22 filter, 23 lower vent member, 24 insulating member, 25 upper vent member, 26 cap, 26a opening, 27 gasket, 30 negative electrode core, 32 first negative electrode mixture layer, 34 second negative electrode mixture layer.

## Claims

1. A lithium-ion battery, comprising:
a positive electrode;
a negative electrode; and
a non-aqueous electrolyte, wherein
the negative electrode has a negative electrode core, a first negative electrode mixture layer formed on a surface of the negative electrode core, and a second negative electrode mixture layer formed on a surface of the first negative electrode mixture layer,
the first negative electrode mixture layer includes a first negative electrode active material including graphite, and
the second negative electrode mixture layer includes a second negative electrode active material including at least one selected from the group consisting of a metal that binds to lithium, an alloy that binds to lithium, and a compound that binds to lithium.

2. The lithium-ion battery according to claim 1, wherein the second negative electrode active material includes an alloy represented by the general formula M₃Me₂X₇, wherein M includes at least one of La and Ca, Me includes at least one element selected from the group consisting of Mn, Ni, Fe, and Co, and X includes at least one element selected from the group consisting of Ge, Si, Sn, Al, and Bi.
